# EUROPEAN PATENT APPLICATION

(11) **EP 4 556 208 A1**
(43) Date of publication of application: **21.05.2025**
(21) Application number: 24209937.2
(22) Date of filing: 30.10.2024
(51) Int. Cl.: B29C 73/04

(54) **REPAIR OF HIGH VALUE THERMOPLASTIC STRUCTURES USING AUTOMATED FIBER PLACEMENT**

(30) Priority: 17.11.2023 US 202318513298
(71) Applicant: Goodrich Corporation, Charlotte, NC 28217-4578 (US)
(72) Inventor: HERMAN, Elizabeth A., Troy (US)
(74) Representative: Dehns

(57) **Abstract**

A method (200, 300, 400) for repairing a thermoplastic part (110, 202, 302) in situ is disclosed herein. The method includes identifying (402) damage (204, 304) on a thermoplastic part, applying (406) a thermoplastic replacement ply (210) to the damage on the thermoplastic part, and consolidating (412) the thermoplastic replacement ply onto the thermoplastic part to weld the thermoplastic replacement ply to the thermoplastic part.

## Description

### TECHNICAL FIELD

The present disclosure generally relates repairing thermoplastic structures, and more particularly, to repairing thermoplastic structures using automated fiber placement.

### BACKGROUND

Thermoplastic materials are being used with increasing frequency in various industries, including aerospace. Throughout their lifetime, the thermoplastic parts may become damaged and in need of repair. The damage may include structural and/or cosmetic defects. Generally, thermoplastic parts that are damaged are removed and replaced. This process is both costly and wasteful.

### SUMMARY

In various embodiments, a method is provided comprising identifying damage on a thermoplastic part, applying a thermoplastic replacement ply to the damage on the thermoplastic part, and consolidating the thermoplastic replacement ply onto the thermoplastic part to weld the thermoplastic replacement ply to the thermoplastic part.

In various embodiments, a method of repairing a thermoplastic part in situ is provided, the method comprising identifying damage on the thermoplastic part, machining the thermoplastic part to remove the damage and form a cavity, assembling a plurality of thermoplastic replacement plies to form an assembled thermoplastic replacement, the assembled thermoplastic replacement being complementary to the cavity, applying the assembled thermoplastic replacement to the cavity, and consolidating the assembled thermoplastic replacement onto the thermoplastic part to weld the assembled thermoplastic replacement to the thermoplastic part.

In various embodiments, a method of repairing a thermoplastic part in situ is provided, the method comprising identifying damage on the thermoplastic part, applying a thermoplastic replacement ply directly to a surface of the thermoplastic part, the thermoplastic replacement ply covering the damage on the thermoplastic part, and consolidating the thermoplastic replacement ply onto the thermoplastic part to weld the thermoplastic replacement ply to the thermoplastic part.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an automated fiber placement machine, in accordance with various embodiments.
FIG. 2 illustrates a method for repairing a thermoplastic part in situ, in accordance with various embodiments.
FIG. 3 illustrates a method for repairing a thermoplastic part in situ, in accordance with various embodiments.
FIG. 4 illustrates a method for repairing a thermoplastic part in situ, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein are processes and methods for repairing thermoplastic parts in situ. In various embodiments, a damaged area of the thermoplastic part is identified. In various embodiments, the thermoplastic part may be machined to remove the damage and form a cavity in the thermoplastic part. In various embodiments, a thermoplastic replacement ply may be tackified and applied to the thermoplastic part, including the cavity. In various embodiments, a thermoplastic ply is applied directly to the damage on the thermoplastic part. In various embodiments, an automated fiber placement (AFP) machine may be used to perform the repairs by consolidating the thermoplastic replacement ply to the thermoplastic part. In various embodiments, the AFP machine includes a pulsed light energy source (e.g., laser) to consolidate material to the damaged area on thermoplastic part.

In various embodiments, a small, portable AFP machine is brought to the thermoplastic part that needs repair. In various embodiments, the in-situ repair using the AFP machine tends to reduce the number of consolidation cycles used to perform a repair. The processes and methods disclosed herein provide a structural repair solution for keeping high value thermoplastic parts in use. In various embodiments, the thermoplastic replacement ply may be the same thermoplastic material that was used to manufacture the thermoplastic part.

The terminology "weld", "join", or "melt" are used interchangeably to mean the consolidation of thermoplastic material using heat and/or pressure, or adhering thermoplastic materials together to form a structure. The word "bond" is not typically used in reference to thermoplastics as this implies a thermoset adhesive is being applied, possibly on a surface specifically prepared or activated for that adhesive, which subsequently undergoes a permanent chemical reaction.

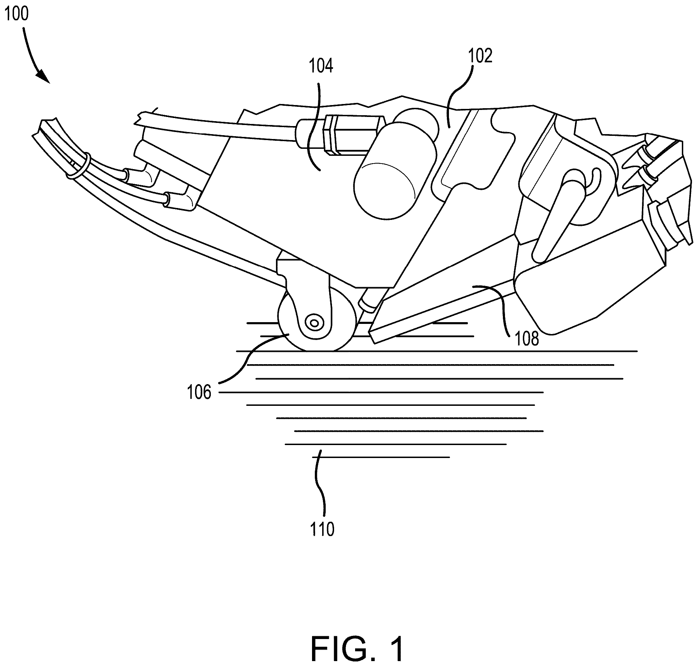

Referring now to FIG. 1, an automated fiber placement (AFP) machine 100 is illustrated, in accordance with various embodiments. AFP machine 100 includes a body 102, a head 104, a roller 106, and laser 108. Head 104 is connected to body 102 that, in various embodiments, includes a power source, a base, and wheels. The base and wheels allow body 102 to be moved to a part 110 that needs to be repaired. This way, part 110 may be repaired in situ. That is, part 110 may be repaired, in various embodiments, without being disassembled and/or removed from its location. Roller 106 and laser 108 are coupled to head 104. In various embodiments, head 104 may be articulated so that roller 106 and laser 108 are brought close to part 110 with roller 106 contacting part 110 and laser 108 being adjacent part 110 without contacting part 110.

Generally, AFP machine 100 is used to build components. AFP machine 100 includes a spool of thermoplastic that AFP machine 100 dispenses as a strip, thread, or a ply, as it moves over part 110, for example. Laser 108 heats the strip causing resin within the thermoplastic strip to melt. Roller 106 then applies a pressure to the strip to weld the strip to part 110. In various embodiments, AFP machine 100, and more specifically roller 106, may apply a pressure of up to about 80 psi (551kPa). In various embodiments, roller 106 may apply a pressure that is greater than 80 psi (551kPa).

In various embodiments where AFP machine 100 is used to perform repairs on part 110, as will be described in further detail below, a thermoplastic strip is not dispensed from AFP machine 100, rather roller 106 and laser 108 are used to melt the damaged material and reconsolidate it with no application of additional thermoplastic. Using AFP machine 100 for repairs of thermoplastic parts (e.g., part 110) allows for repairs to be performed using the same material that was originally used to create the part (i.e., the same material listed in the engineering requirements). That is, in various embodiments, no new or different types of materials (i.e., different from the material from which the part is made) are used for the repair. Furthermore, AFP machine 100 may be lighter than conventional systems for repair of thermoplastic parts and is mobile. The light weight and mobility of AFP machine 100 allow AFP machine 100 to go to part 110 instead of removing part 110 and taking part 110 to a repair machine.

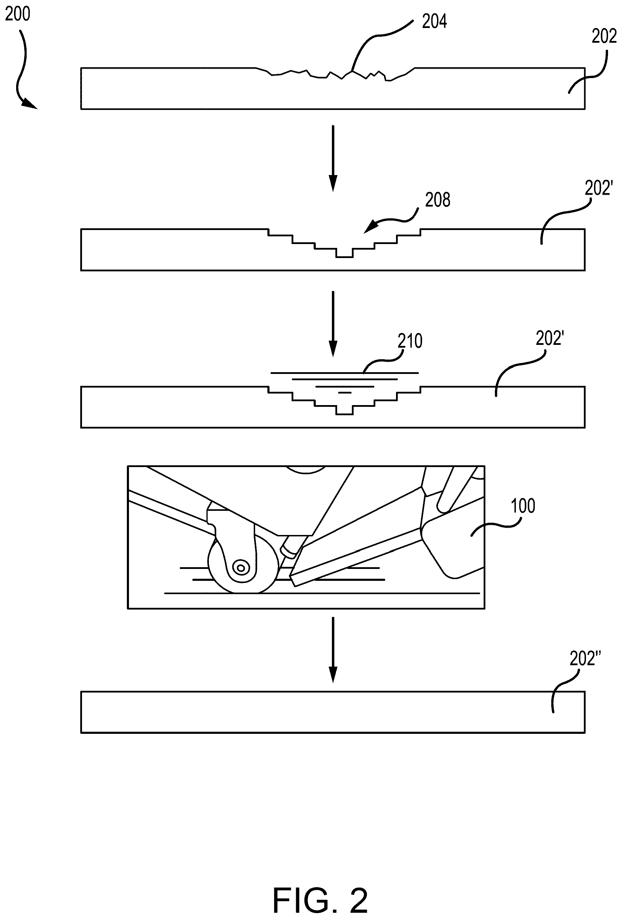

Referring now to FIG. 2, a method 200 for repair or a thermoplastic part 202 having damage 204 is illustrated, in accordance with various embodiments. Damage 204 may be identified during inspection, cleaning, and/or routine maintenance. Damage 204 of thermoplastic part may, in various embodiments, be cosmetic and/or structural. Damage 204 may extend along a length and width of thermoplastic part 202. Damage 204 may extend a depth into thermoplastic part 202.

After identifying damage 204, part 202 is machined to remove damage 204, thereby creating a cavity 208 in part 202'. Cavity 208 may alternatively be referred to as, an opening, a hole, a crater, a pit, a hollow, etc. Damage 204 may be removed by using a computer numerically controlled (CNC) machine, a saw, a drill, a knife, a water cutter, a laser cutter, a chisel, a sander, or other cutting or sanding device. In various embodiments, cavity 208 may include multiple defined steps, or elevations, each corresponding to a ply layer, as illustrated in FIG. 2. In various embodiments, cavity may have rounded edges and appear to be circular or elliptical.

A plurality of replacement plies 210 of thermoplastic material are then applied to part 202'. Generally, the plurality of replacement plies 210 are custom fit to fill cavity 208 and may be applied to part 202', for example, by hand. In various embodiments, the plurality of replacement plies 210 are the same thermoplastic material as part 202. In various embodiments, the plurality of replacement plies 210 may include a different thermoplastic material than part 202. In various embodiments, the plurality of replacement plies 210 may include a single replacement ply 210. In various embodiments, the plurality of replacement plies 210 may be stacked and/or assembled before being applied to part 202'. In various embodiments, each of the plurality of replacement plies 210 in the stack may have a different length and/or width. In various embodiments, the plurality of replacement plies 210 will match the number of plies removed to create the depth of cavity 208. In various embodiments, the plurality of replacement plies 210 will not match the number of plies removed to create the depth of cavity 208. As illustrated in FIG. 2, each of the plurality of plies 210 has a different length so that the stack of the plurality of plies 210 fits into cavity 208. Generally, the smallest replacement ply 210 will be on the bottom of the stack and the largest replacement ply 210 will be on the top of the stack.

The steps of method 200 may vary depending on the length, width, and depth of cavity 208. In various embodiments, the plurality of plies 210 may be placed, or stacked, in cavity 208 and may then be consolidated in place. In various embodiments, the plurality of plies 210 may be consolidated before being applied to part 202'. That is, the plurality of plies 210 may be assembled upside down so that the largest replacement ply 210 is on the bottom and the smallest replacement ply 210 is on the top. In various embodiments, and depending on the shape of part 202', the plurality of plies may be assembled on flat surface and/or a curved surface. This upside-down stack may then be consolidated, or welded together. In various embodiments, the consolidation may be performed in an oven, in a vacuum bag, in an autoclave, or by an AFP machine (e.g., AFP machine 100), among others. The consolidated stack of replacement plies 210 is designed to fit into cavity 208. That is, the consolidated stack of replacement plies 210 is complimentary to cavity 208.

The plurality of replacement plies 210 is tackified and applied to part 202', and more specifically, to cavity 208. As described herein, tackifying is the process of making a replacement ply 210 tacky, or sticky, so that the replacement ply 210 temporarily sticks to part 202'. Thus, adhesives are not used to stick replacement ply 210 to part 202' in a permanent manner. In various embodiments, one or more of the plurality of replacement plies 210 is tackified so that the plurality of replacement plies 210 stay in place on part 202' during the consolidation process using AFP machine 100. That is, the tackified surface of the plurality of replacement plies 210 temporarily sticks to part 202'.

In various embodiments, one or more corners and/or the center of the one or more of the plurality of replacement plies 210 is heated (e.g., to 700°F) to melt the thermoplastic of the respective replacement ply 210, thereby making the replacement ply 210 sticky, or tacky. In various embodiments, the plurality of replacement plies 210 may be tackified using a soldering iron, a flat tip of the soldering iron, a hand held ultrasonic welder, or a pulsed laser, among others. The same steps apply for the consolidated stack of replacement plies 210 being applied to part 202'.

AFP machine 100 is then used to consolidate the plurality of replacement plies 210 and part 202' to form a repaired part 202". That is, AFP machine 100 applies heat from laser 108 and pressure from roller 106 to the plurality of replacement plies 210 so that the plurality of replacements plies 210 are welded to part 202'. AFP machine 100, using laser 108, heats a top surface of the plurality of replacement plies 210. In various embodiments, a hot gas torch that blows hot air may be used for the consolidation process instead of a pulsed energy source (e.g., laser 108). The heat passing through the layers of the plurality of replacement plies 210 causes the resin inside each of the plurality of replacement plies 210 to melt. Roller 106 then applies pressure to the plurality of replacement plies 210 to weld, or consolidate, the plurality of replacement plies 210 and part 202'. In various embodiments, the pressure may be about 5 psi (34 kPa) to about 120 psi (827 kPa), about 40 psi (275 kPa) to about 100 psi (689 kPa), or about 60 psi (413 kPa) to about 80 psi (551 kPa). In various embodiments, the pressure may be above 120 psi (827 kPa). After consolidation, part 202" is repaired and ready for use.

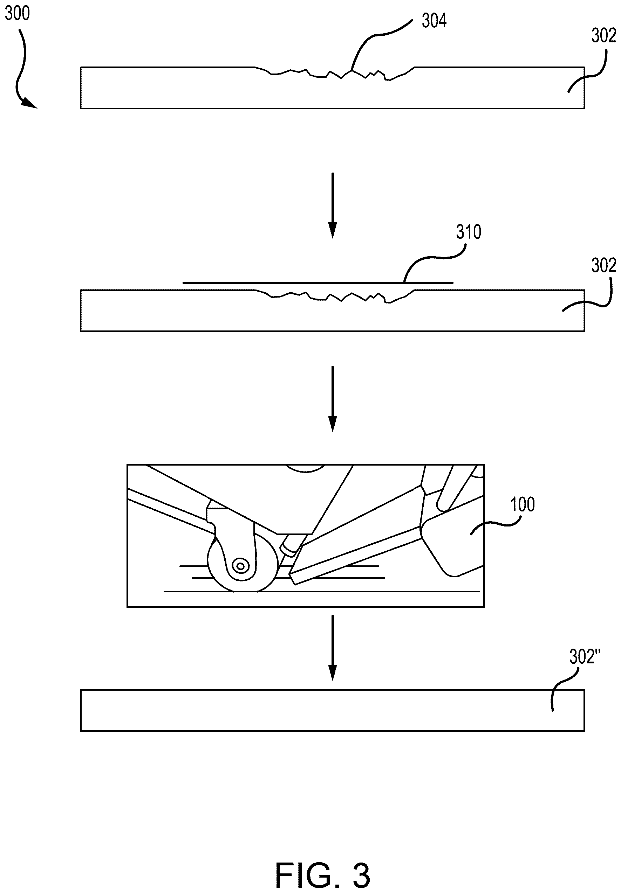

Referring now to FIG. 3, a method 300 of repairing a thermoplastic part 302 having damage 304 is illustrated, in accordance with various embodiments. Method 300 includes similar steps as method 200 including identifying damage 304 on a part 302, tackifying and applying a plurality of replacement plies 310 to damage 304 of part 302, consolidating the plurality of replacement plies 310 on part 302 using AFP machine 100, descriptions of which will not be repeated below. Method 300 includes applying the plurality of replacements plies 310 directly to damage 304 instead of machining out damage to create a cavity. That is, the plurality of replacements plies 310 are tackified, as previously described, and applied to damage 304. The plurality of replacement plies 310 are then consolidated, as described above, resulting in a repaired part 302". In various embodiments, and depending on damage 304, one or more replacement plies 310 of the plurality of replacement plies 310 may be used. In various embodiments, the plurality of replacement plies 310 may be sized to cover damage 304. In various embodiments, the plurality of replacement plies 310 may be about 5% to about 10% larger than damage 304 to ensure damage 304 is properly fixed.

Repairing part 202, 302 in this manner allows for correctly sized replacement plies 210, 310 to be used. This tends to reduce the chance of damaging part 202, 302 during the repair process and tends to reduce rework of the repair.

Typically, AFP machine 100 is used to build or repair parts by applying material (e.g., a ply) using roller 106 and laser 108, with no tackifying of plies. That is, AFP machine 100 is designed to dispense the ply as it is placed with AFP machine 100. However, this results in extra material that is removed after the consolidation process. The removal of this extra material tends to increase the chance of damage to part 202, 302 and/or increase rework of the repair due to problems in removing the extra material. In contrast, presizing the plurality of replacement plies 210, 310 and tackifying them in place prior to application of roller 106 and laser 108 allows for repairs to be completed efficiently with no material removal steps afterward.

Additionally, in examples where part 202, 302 tends to be damaged in the same way across parts, the repair may, in various embodiments, be automated. That is, the plurality of replacement plies 210, 310 may be pre-assembled and ready to be applied to damage 204, 304 of part 202, 302. In various embodiments, cavity 208 may be standardized to accommodate this preparation and automation.

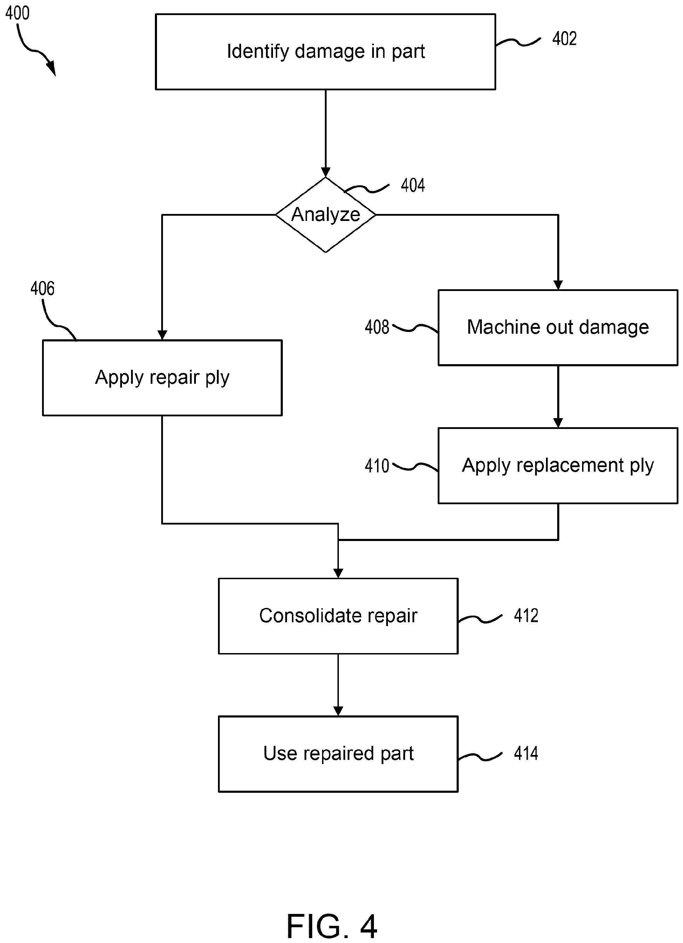

Referring now to FIG. 4, a method 400 for repairing a thermoplastic part is illustrated, in accordance with various embodiments. Method 400 may be performed using an automated fiber placement (AFP) machine (e.g., AFP machine 100) as described above. At block 402, damage in a part is identified. At decision block 404, the amount of damage is determined, including the type of damage and the length, width, and depth of the damage. If it is determined that a repair ply can be applied directly to the damage, method 400 proceeds to block 406. At block 406, the repair ply is applied to damage as previously described in connection with FIG. 3.

Returning to decision block 404, if instead it is determined that the damage is larger or deeper, method 400 proceeds to block 408. At block 408, the damage is machined out of the part to form a cavity, as previously described in connection with FIG. 2. At block 410, the replacement ply, or stack of replacement plies, is applied to the cavity. At block 412, the repair is consolidated to weld the repair ply to the part. At block 414, the part is finished and put into use.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A method, comprising:
identifying damage on a thermoplastic part;
applying a thermoplastic replacement ply to the damage on the thermoplastic part; and
consolidating the thermoplastic replacement ply onto the thermoplastic part to weld the thermoplastic replacement ply to the thermoplastic part.

2. The method of claim 1, further comprising:
machining the thermoplastic part to remove the damage and create a cavity.

3. The method of claim 2, further comprising:
assembling a plurality of thermoplastic replacement plies to fit into the cavity, the plurality of thermoplastic replacement plies including the thermoplastic replacement ply; and
applying the assembled plurality of thermoplastic replacement plies to the thermoplastic part, including the cavity.

4. The method of claim 3, further comprising:
consolidating the assembled plurality of thermoplastic replacement plies before applying the assembled plurality of thermoplastic replacement plies to the cavity of the thermoplastic part.

5. The method of any preceding claim, wherein the consolidating further comprises:
applying heat to the thermoplastic replacement ply; and
applying pressure to the thermoplastic replacement ply and the thermoplastic part.

6. The method of claim 5, wherein the applying heat includes using a laser to apply heat to the thermoplastic replacement ply.

7. The method of any preceding claim, further comprising performing the identifying, the applying, and the consolidating in situ.

8. A method of repairing a thermoplastic part in situ, the method comprising:
identifying damage on the thermoplastic part;
machining the thermoplastic part to remove the damage and form a cavity;
assembling a plurality of thermoplastic replacement plies to form an assembled thermoplastic replacement, the assembled thermoplastic replacement being complementary to the cavity;
applying the assembled thermoplastic replacement to the cavity; and
consolidating the assembled thermoplastic replacement onto the thermoplastic part to weld the assembled thermoplastic replacement to the thermoplastic part.

9. The method of claim 8,
further comprising consolidating the assembled thermoplastic replacement before applying the assembled thermoplastic replacement to the cavity; and/or
wherein the consolidating the assembled thermoplastic replacement onto the thermoplastic part is performed using an automated fiber placement machine; and/or
further comprising tackifying the assembled thermoplastic replacement before applying the assembled thermoplastic replacement to the cavity.

10. The method of claim 8 or 9, wherein the consolidating further comprises:
applying heat to a top surface of the assembled thermoplastic replacement after applying the assembled thermoplastic replacement to the cavity; and
applying pressure to the top surface of the assembled thermoplastic replacement.

11. The method of claim 10, wherein applying heat to the top surface includes directing a laser to the top surface of the assembled thermoplastic replacement to heat the assembled thermoplastic replacement; and/or
wherein applying heat to the top surface includes directing hot air to the top surface of the assembled thermoplastic replacement.

12. A method of repairing a thermoplastic part in situ, the method comprising:
identifying damage on the thermoplastic part;
applying a thermoplastic replacement ply directly to a surface of the thermoplastic part, the thermoplastic replacement ply covering the damage on the thermoplastic part; and
consolidating the thermoplastic replacement ply onto the thermoplastic part to weld the thermoplastic replacement ply to the thermoplastic part.

13. The method of claim 12, wherein the thermoplastic replacement ply is the same material as the thermoplastic part; and/or
wherein the consolidating the thermoplastic replacement ply onto the thermoplastic part is performed using an automated fiber placement machine; and/or
wherein the consolidating further comprises:
applying heat to the thermoplastic replacement ply after applying the thermoplastic replacement ply to the surface; and
applying pressure to a top surface of the thermoplastic replacement ply.

14. The method of claim 12 or 13, further comprising:
tackifying the thermoplastic replacement ply to the surface of the thermoplastic part.

15. The method of claim 14, the tackifying further comprising:
heating a portion of the thermoplastic replacement ply, wherein the portion includes one or more corners and a center of the thermoplastic replacement ply.
